# EUROPÄISCHE PATENTSCHRIFT

(11) **EP 1 606 187 B1**
(45) Veröffentlichungstag und Bekanntmachung des Hinweises auf die Patenterteilung: **02.09.2009**
(21) Anmeldenummer: 04721857.3
(22) Anmeldetag: 19.03.2004
(51) Int. Cl.: B65D 63/10, B65B 13/18

(54) **SCHLAUCHVERPACKUNGS-VERSCHLUSSEINRICHTUNG**
TUBULAR PACKAGING SEALING DEVICE
DISPOSITIF DE FERMETURE POUR EMBALLAGES TUBULAIRES

(30) Priorität: 21.03.2003 DE 10312567
(43) Veröffentlichungstag der Anmeldung: 21.12.2005
(73) Patentinhaber: Frans Vermee GmbH, 53424 Remagen (DE)
(72) Erfinder: VERMEE, Frans, 53424 Remagen (DE); LARIN, Leonid, Moskau, 127635 (RU)
(74) Vertreter: von Kirschbaum, Alexander
(86) Internationale Anmeldenummer: PCT/EP2004/002885
(87) Internationale Veröffentlichungsnummer: WO 2004/083067

(56) Entgegenhaltungen:
- DE-A- 19 603 659
- DE-C- 529 045
- DE-C- 10 120 757
- GB-A- 2 372 282
- US-A- 4 183 119
- US-A- 5 873 303
- US-A- 6 024 136
- US-A- 6 044 525

## Beschreibung

Die Erfindung betrifft eine Schlauchverpackungs-Verschlusseinrichtung zum Verschließen von mit einem Gut befüllten Schlauchverpackungen.

In derartigen Schlauchverpackungen werden beispielsweise streichbare Lebensmittel, wie Wurst, Butter, etc. verpackt. Ferner dienen derartige Schlauchverpackungen zum Verpacken chemischer Produkte, wie Silikone, Klebstoffe, Sprengstoffe etc. Beim Verpacken des Gutes wird ein Verpackungsschlauch mit dem Gut gefüllt und der Schlauch anschließend durch Verschlussklammern bzw. Verschlusselemente verschlossen. Dies erfolgt beispielsweise bei einem Endlosschlauch in regelmäßigen Abständen, um gleichmäßig große Schlauchverpackungen zu erzeugen. Zwischen zwei Schlauchverpackungen werden jeweils zwei Verschlusselemente angeordnet, zwischen denen die Schlauchverpackung zertrennt werden kann. Da auf die Verschlussklammer bzw. das Verschlusselement große Radialkräfte wirken und ein dichtes Abschließen gewährleistet sein muss, werden Verschlussklammern aus Metall verwendet. Derartige Verschlussklammern sind aus DE 40 11 470 bekannt.

Ferner ist aus WO 02/100732 ein Verschlusselement bekannt, das auch aus Kunststoff hergestellt sein kann. Hierbei handelt es sich um ein bandförmiges Verschlusselement mit einem durchgehenden Klemmsteg und durchgehenden Klemmnuten. Das Verschlusselement kann zu einem Ring zusammengebogen werden, so dass der an der Außenseite oder Innenseite angeordnete Klemmsteg in die an der entsprechend anderen Seite angeordnete Klemmnut eingreift. Das als Endlosband vorgesehene Verschlusselement weist über die gesamte Länge denselben Querschnitt auf. Das Verschlusselement ist zum Verschließen von Schlauchverpackungen prinzipiell gut geeignet. Bei hohen auftretenden Radialkräften kann es jedoch zum Lösen dieses Verschlusselementes kommen. Hohe Radialkräfte treten beispielsweise bei Schlauchverpackungen mit einem großen Querschnitt auf, bei denen eine große Menge an Schlauchverpackungsmaterial zusammengerafft und durch das Verschlusselement zusammengehalten werden muss. Diese Kräfte erhöhen sich weiter bei Verwenden eines dicken Schlauchmaterials.

Aufgabe der Erfindung ist es, eine Schlauchverpackungs-Verschtusseinrichtung zu schaffen, die Verschlusselemente umfasst, mit denen insbesondere auch hohe Radialkräfte aufgenommen werden können.

Die Lösung der Aufgabe erfolgt erfindungsgemäß durch die Merkmale des Anspruchs 1.

Die Schlauchverpackungs-Verschlusseinrichtung für mit Gut befüllten Schlauchverpackungen weist mehrere Verschlusselemente auf. Jedes einzelne Verschlusselement weist ein langgestrecktes Verbindungselement mit an einer Seitenfläche angeordneten ersten Rastelementen auf. Ferner weist jedes Verschlusselement ein mit dem Verbindungselement verbundenes Kopfelement auf. Das Kopfelement weist eine Aufnahmeöffnung mit mindestens einem zweiten Rastelement auf. Zum Verschließen des Verschlusselements wird dieses ringförmig zusammengebogen, so dass ein freies Ende des Verbindungselements in die Aufnahmeöffnung eingeführt werden kann. Die Aufnahmeöffnung ist erfindungsgemäß vorzugsweise derart ausgebildet, dass sie in geschlossenem, d.h. im Wesentlichen ringförmigem, Zustand das Verbindungselement zumindest teilweise umgibt. Vorzugsweise ist die Aufnahmeöffnung zumindest in Längsrichtung des Verschlusselements geschlossen. In geschlossenem Zustand weist die Aufnahmeöffnung somit einen außen angeordneten Quersteg auf, gegen den das Verbindungselement drückt. Ein Herausrutschen des Verbindungselements aus der Aufnahmeöffnung ist somit durch die Rastelemente und den Quersteg vermieden. Dies hat zur Folge, dass hohe Radialkräfte von dem Verbindungselement aufgenommen werden können. Der quer zur Längsrichtung verlaufende Steg der Aufnahmeöffnung verläuft vorzugsweise über die gesamte Breite des Verschlusselements. Besonders bevorzugt handelt es sich bei der Aufnahmeöffnung um eine geschlossene Öffnung bzw. Öse, die das Verbindungselement in geschlossenem Zustand vollständig umgibt.

Vorzugsweise sind die einzelnen Verschlusselemente der Schlauchverpackungsverschluss-Einrichtung als ein Band ausgebildet, wobei das Band besonders bevorzugt zumindest zweireihig ausgebildet ist. Das Band weist somit mindestens ein Bandelement auf, wobei das Bandelement mehrere hintereinander in Längsrichtung angeordnete und miteinander verbundene Verschlusselemente aufweist. Besonders bevorzugt weist das Band genau zwei Bandelemente auf, wobei es allerdings auch möglich ist, dass das Band mehrere Paare, insbesondere genau zwei Paare Bandelemente aufweist, wobei jeweils ein Paar Bandelemente einen größeren Abstand aufweisen als die beiden Bandelemente eines einzelnen Paares. Die Bandelemente, insbesondere die beiden Bandelemente eines Bandelementen-Paares, sind vorzugsweise über quer zur Längsrichtung der Verschlusselemente verlaufende Stegteile miteinander verbunden, so dass mehrere Verschlusselemente sowohl hintereinander als auch nebeneinander in einer definierten Lage zueinander angeordnet sind. Die Stegteile sind insbesondere auf Höhe der Kopfelemente der Verschlusselemente zwischen den Kopfelementen angeordnet. Das Stegteil ist also an Seitenflächen einander gegenüberliegender Kopfelemente befestigt, wobei die Seitenflächen quer zur Längsrichtung der Verschlusselemente und quer zur Einführrichtung des Verbindungselementes in die Aufnahmeöffnung des Kopfelements ausgerichtet sind.

Das Stegteil ist vorzugsweise flächig ausgeführt. D. h., das Stegteil weist in Längsrichtung der Verschlusselemente eine größere Breite auf als die Stärke des Stegteils quer zur Längsrichtung der Verschlusselemente. Dadurch wird ein Versatz in Längsrichtung benachbarter Verschlusselemente vermieden und gleichzeitig eine Biegeflexibilität der benachbarten Verschlusselemente zueinander gewährleistet. Durch die Stegteile ist somit eine definiertere Lage zweier benachbarter Bandelemente möglich, wobei auf Grund der Flexibilität der beiden Bandelemente zueinander die Schlauchverpackungsverschluss-Einrichtung insbesondere für automatisierte Verschlusseinrichtung zum automatischen Verschließen von Schlauchverpackungen geeignet ist. Insbesondere ist es mit Hilfe einer geeigneten Verschlusseinrichtung möglich, zwei Verschlusselemente gleichzeitig zu verschließen, so dass in einem einzigen Arbeitsschritt jeweils ein Ende unterschiedlicher Schlauchverpackungen verschlossen werden kann. In einem weiteren Schritt einer geeigneten Verschlusseinrichtung erfolgt ein Trennen der einzelnen Schlauchverpackungen voneinander, wobei in diesem Trennschritt das zwischen den Kopfelementen zweier benachbarter Verschlusselemente angeordnete Stegteil gleichzeitig mit der Trennung der Schlauchverpackung mit durchtrennt wird, wobei die Trennung des Stegteils auf Grund der insbesondere geringen Stärke und der im Verhältnis dazu großen Breite des Stegteils besonders einfach, d. h. insbesondere mit geringem Kraftaufwand und einer geringen Gefahr des Verrutschens, erfolgen kann. Dadurch, dass das Stegteil insbesondere zwischen den Kopfelementen zweier benachbarter Verschlusselemente angeordnet ist, ist insbesondere vermieden, dass ein Teil des Stegteils in Längsrichtung übersteht, so dass die Verwendung der erfindungsgemäßen Schlauchverpackungsverschlusseinrichtung in einer automatisierten Verschlusseinrichtung zum automatischen Verschließen von Schlauchverpackungen einfacher und genauer erfolgen kann.

Um ein leichteres Einführen des freien Endes des Verbindungselementes in die Aufnahmeöffnung zu ermöglichen, weist das freie Ende vorzugsweise Abschrägungen auf. Vorzugsweise sind die beiden Schmalseiten nach innen abgeschrägt. Die Breite des Verbindungselements nimmt in Längsrichtung betrachtet somit am freien Ende vorzugsweise kontinuierlich ab. Vorzugsweise sind bei einem im Querschnitt rechteckigen Verbindungselement alle vier Seiten abgeschrägt, so dass sich der Querschnitt des Verbindungselements in Richtung des freien Endes verjüngt, wobei das Verbindungselement am freien Ende sodann sowohl schmaler wird, als auch eine geringere Höhe aufweist.

Besonders bevorzugt ist es, an der Aufnahmeöffnung Führungsflächen vorzusehen. Diese dienen zum erleichterten Einführen des insbesondere Abschrägungen aufweisenden freien Endes des Verbindungselements. Besonders bevorzugt ist es hierbei, zumindest eine Führungsfläche vorzusehen, die am in Längsrichtung äußeren Ende einer vorzugsweise im Querschnitt rechteckigen Aufnahmeöffnung vorgesehen ist. Hierdurch wird bei einem Verschließen des Verschlusselements zu einem Ring ein Führen des freien Endes nach innen gewährleistet. Dies ist insbesondere bei aus Kunststoff hergestellten Verschlusselementen vorteilhaft, da diese dazu neigen, sich entgegen ihrer Verbiegungsrichtung wieder zurück zu formen.

Besonders bevorzugt ist es, die Aufnahmeöffnung auf derjenigen Seite, von der das freie Ende des Verbindungselementes zugeführt wird, trichterförmig auszugestalten. Bei einer beispielsweise rechteckigen Aufnahmeöffnung weist der Trichter somit vier Führungsflächen auf. Durch die Führungsflächen wird der Eintrittsquerschnitt der Aufnahmeöffnung vergrößert.

Um das Verschlusselement insbesondere zum automatischen Verschließen von Schlauchverpackungen mit einer Verschlussvorrichtung verwenden zu können, weist das Verschlusselement vorzugsweise über die gesamte Länge im Wesentlichen dieselbe Dicke auf. Ein Verschlusselement, das im Wesentlichen über die gesamte Länge die gesamte Dicke aufweist, hat dabei den Vorteil, dass die als Endlosmaterial vorgesehene Schlauchverpackungs-Verschlusseinrichtung besser als Rolle verarbeitet werden kann.

Besonders bevorzugt ist es, beim Verschließen der Schlauchverpackung das überstehende Ende des Verschlusselements entweder abzuschneiden oder fest mit dem Verschlusselement zu verbinden. Das feste Verbinden kann beispielsweise durch Verkleben oder Verschmelzen erfolgen. Besonders geeignet ist ein Ultrasonic-Versiegeln.

Vorzugsweise ist auf einer Unterseite der Schlauchverpackungs-Verschlusseinrichtung, d.h. auf einer Unterseite der zu einem Endlosband miteinander verbundenen Verschlusselemente, die vorzugsweise in zwei Reihen angeordnet sind, eine Trägerfolie vorgesehen. Die Trägerfolie hat den Vorteil, dass die Lage der einzelnen Verschlusselemente klar definiert ist und beispielsweise ein Verrutschen des freien Endes eines Verschlusselementes während des Verschließens der Schlauchverpackung vermieden ist. Vorzugsweise wird die Trägerfolie während des Verschließens von den Verschlusselementen abgezogen. Ferner hat das Vorsehen einer Trägerfolie den Vorteil, dass die Verschlusselemente in einer Verschließvorrichtung um die zu verschließende Schlauchverpackung herum gezogen werden können.

Bei einer weiteren bevorzugten Ausführungsform sind an der Unterseite der Verschlusselemente, d.h. an der Seite der Verschlusselemente, die in Richtung der zu verschließenden Schlauchverpackung weisen, Längsrillen vorgesehen. Es kann sich hierbei um eine einzige Längsrille handeln. Vorzugsweise sind mehrere Längsrillen vorgesehen. Die einzelnen Längsrillen erstrecken sich vorzugsweise über die gesamte Länge des Verschlusselements. Ebenso können die Längsrillen aber auch unterbrochen sein. Anstatt des Vorsehens von Längsrillen können auch anders geformte Ausnehmungen an der Unterseite der Verschlusselemente vorgesehen sein. Das Vorsehen derartiger Längsrillen oder Ausnehmungen hat den Vorteil, dass die Folie der Schlauchverpackungen bei verschlossener Schlauchverpackung in die Ausnehmungen bzw. Rillen gedrückt wird. Hierdurch entsteht eine Art formschlüssige Verbindung zwischen der Folie oder einem anderen Material der Schlauchverpackung und dem Verschlusselement. Hierdurch ist ein Herunterrutschen des Verschlusselementes vermieden.

Erfindungsgemäß ist das Verschlusselement und insbesondere die Schlauchverpackungs-Verschlusseinrichtung, die mehrere Verschlusselemente aufweist, zum automatischen Verschließen von Schlauchverpackungen mit Hilfe einer Verschlusseinrichtung geeignet. Eine geeignete Verschlusseinrichtung zum automatischen Verschließen von Schlauchverpackungen ist insbesondere in WO 02/087974 beschrieben. Eine für die erfindungsgemäße Schlauchverpackungs-Verschlusseinrichtung besonders geeignete Verschlusseinrichtung ist in der deutschen Patentanmeldung DE 103 12 569.8 beschrieben, die auch in der Figurenbeschreibung näher erläutert ist.

Nachfolgend wird die Erfindung sowie eine geeignete automatische Verschlusseinrichtung anhand der anliegenden Zeichnungen näher erläutert.

Es zeigen:
- Fig. 1: eine schematische Draufsicht einer bevorzugten Verschlussvorrichtung zum Verschließen von Schlauchverpackungen unter bevorzugter Verwendung der erfindungsgemäßen Schlauchverpackungs-Verschlusseinrichtung in geöffnetem Zustand,
- Fig. 2: eine schematische Draufsicht der Verschlussvorrichtung in teilweise geschlossenem Zustand,
- Fig. 3: einen schematischen vergrößerten Ausschnitt der Verschlussvorrichtung, bei der sich das Verschlusselement in der Verbindungslage befindet,
- Fig. 4: einen schematischen vergrößerten Ausschnitt der Verschlussvorrichtung in geschlossenem Zustand,
- Fig. 5: eine schematische Schnittansicht entlang der Linie VI-VI in Fig. 1,
- Fig. 6: eine schematische perspektivische Ansicht einer erfindungsgemäßen Schlauchverpackungs-Verschlusseinrichtung,
- Fig. 7: eine schematische Draufsicht der Schlauchverpackungs-Verschlusseinrichtung,
- Fig. 8: eine schematische Schnittansicht entlang der Linie VIII-VIII in Fig. 7,
- Fig. 9: eine schematische Schnittansicht entlang der Linie IX - IX in Fig. 7 und
- Fig. 10: eine schematische, teilweise geschnittene Seitenansicht der Verschlussvorrichtung.

Die erfindungsgemäße Verschlusseinrichtung weist im dargestellten Ausführungsbeispiel sechs im Wesentlichen dreieckige Verschlusselemente 10 auf. Die Verschlusselemente 10 sind sternförmig bzw. auf einem Kreis angeordnet, so dass innerhalb der Verschlusselemente 10 eine im Wesentlichen sechseckige Verschlussöffnung 12 ausgebildet ist. Die Verschlusselemente 10 sind in einer Halterung 11, die beispielsweise eine Art Kulissenführung aufweist, gehalten. Durch Verschieben der Verschlusselemente in Richtung der Pfeile 14 wird die Verschlussöffnung 12 verkleinert.

Das Bewegen der Verschlusselemente 10 kann beispielsweise wie in WO 02/087974 beschrieben erfolgen.

Über einen Zuführkanal wird ein mehrere Verschlusselemente bzw. Verschlussklammern 16 aufweisendes Verschlussklammerband 18 in die Verschlussöffnung 12 eingeführt.

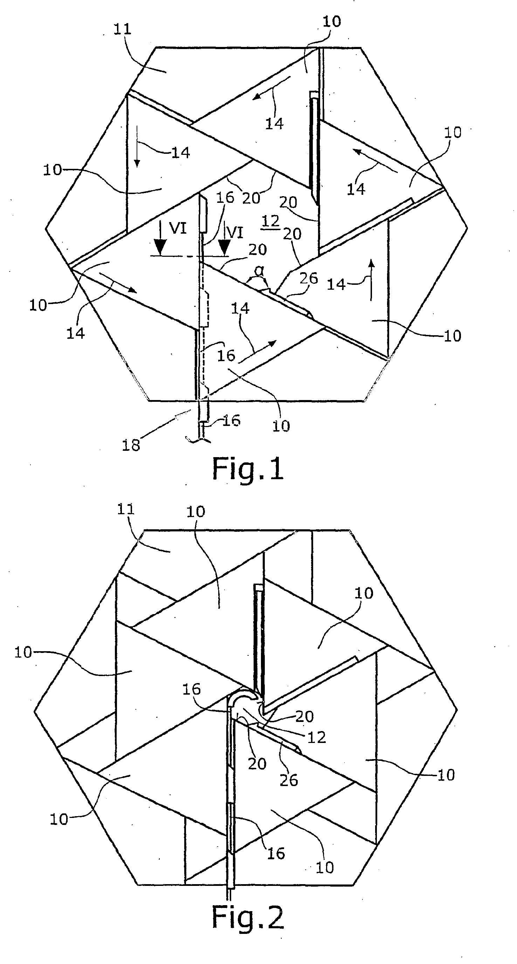

Durch Verschieben der einzelnen Verschlusselemente 10 in Richtung der Pfeile 14 und das damit verbundene Verringern des Querschnitts der Verschlussöffnung 12 führt dazu, dass die Verschlusselemente 16, die an Innenseiten 20 der Verschlusselemente 10 anliegt, gebogen wird (Fig. 2). Durch dieses Biegen erfolgt ein Herumführen des Verschlusselements bzw. der Verschlussklammer 16 um eine Schlauchverpackung, die innerhalb der Verschlussöffnung 12 angeordnet ist. Die Schlauchverpackung ist aus Gründen der Übersichtlichkeit in den Fign. 1 - 4 nicht dargestellt.

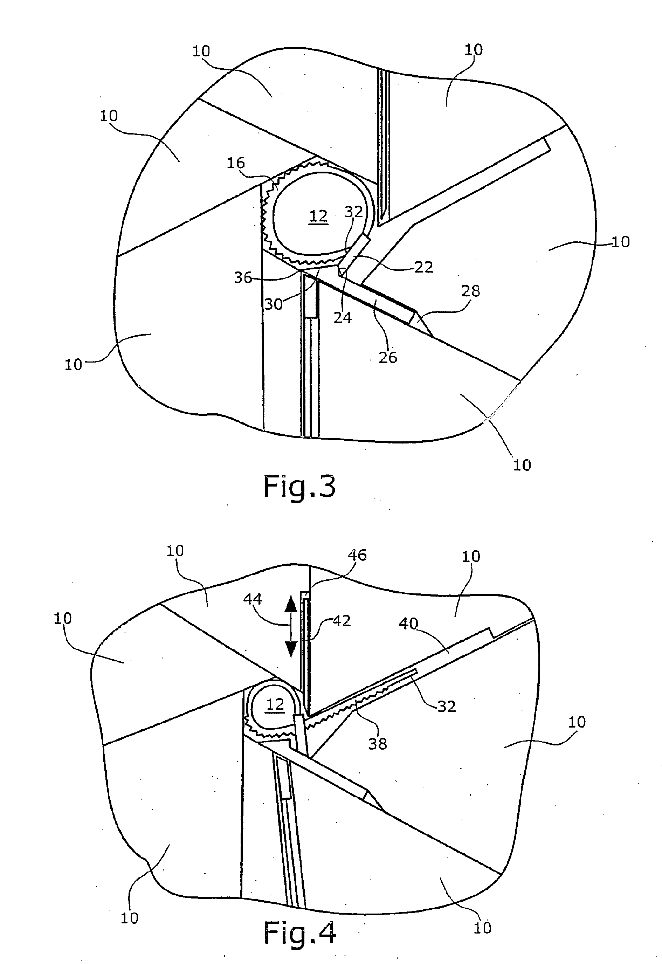

Bei einem weiteren Verschieben der Verschlusselemente, d.h. einem weiteren Verkleinern der Verschlussöffnung 12 wird der Verschlusselement 16 weiter gebogen, bis sie in die Verbindungslage (Fig. 3) gelangt. Hierbei wird das Verschlussklammerband 18 ggf. nachgeschoben. In der Verbindungslage gelangt ein erstes Ende 22 bzw. ein Kopf des Verschlusselements 16 an ein Positionierelement 24. Das Positionierelement 24, bei dem es sich im dargestellten Ausführungsbeispiel um einen Anschlag handelt, ist im dargestellten Ausführungsbeispiel an einem ersten Schneideelement 26 angeordnet. Das Schneideelement 26 ist in einem Schlitz 28, der in einem Verschlusselement 10 angeordnet ist, vorgesehen bzw. gehalten. Das erste Schneideelement 26 gleitet somit an der Innenkante 20 des benachbarten Verschlusselementes 10. In der Verbindungslage wird das erste Ende 22 des Verschlusselements 16 durch das Positionierelement bzw. den Anschlag 24 in der dargestellten Verbindungslage (Fig. 3) gehalten. Durch den Anschlag 24 ist ein Verrutschen des ersten Endes 22 bzw. ein weiteres Gleiten an den Innenseiten 20 der Verschlusselemente 10, d.h. in Fig. 3 nach links, verhindert. Das Positionierelement kann auch unabhängig von dem ersten Schneideelement 26 vorgesehen und beispielsweise fest mit einem Verschlusselement 10 verbunden sein.

Ferner ist ein Führungselement 30 vorgesehen. Das Führungselement 30 dient dazu, ein zweites Ende 32 des Verschlusselements 16 von einer Innenfläche 20 (Fig. 3) eines Verschlusselementes 10 weg in Richtung des Kopfendes 22 des Verschlusselements 16 zu führen. Hierdurch wird das zweite Ende 32 in Richtung einer Öffnung 34 des Verschlusselements geführt. Das Führungselement 30, das im dargestellten Ausführungsbeispiel einstückig mit dem ersten Schneideelement 26 ist, weist eine schräge Führungsfläche auf.

Das erste Schneideelement 26 weist eine Schneidkante 36 auf. Die Schneidkante 36 dient, wie insbesondere anhand Fig. 2 ersichtlich, zum Abschneiden eines Verschlusselements 16 von dem Verschlussklammerband 18.

Bei einem nach Erreichen der Verbindungslage weiteren Verschieben der Verschlusselemente, d.h. einem weiteren Verringern der Größe der Verschlussöffnung 12, wird das zweite Ende 32 des Verschlusselements 16 weiter durch die Öffnung 34 hindurch geschoben (Fig. 4). Hierbei gelangt der entstehende Überstand 38 bzw. das zweite Ende 32 in einen Aufnahmekanal 40. Der Aufnahmekanal 40 ist in einem der Verschlusselemente 10 angeordnet. Mit Hilfe eines zweiten Schneidelements 42 kann nach vollständigem Verschließen der Schlauchverpackung der Überstand 38 abgeschnitten werden. Der Überstand 38 fällt sodann aus der Verschlussvorrichtung. Vorzugsweise ist eine Absaugvorrichtung in dem Absaugkanal 40 vorgesehen, um sicherzustellen, dass der abgeschnittene Überstand sicher aus der Verschlusseinrichtung entfernt wird. Das zweite Schneidelement 42 ist vorzugsweise in Richtung eines Pfeils 44 von einer nicht dargestellten Antriebseinrichtung verschiebbar und in einem innerhalb eines Verschlusselements 10 angeordneten Ausnehmung 46 angeordnet.

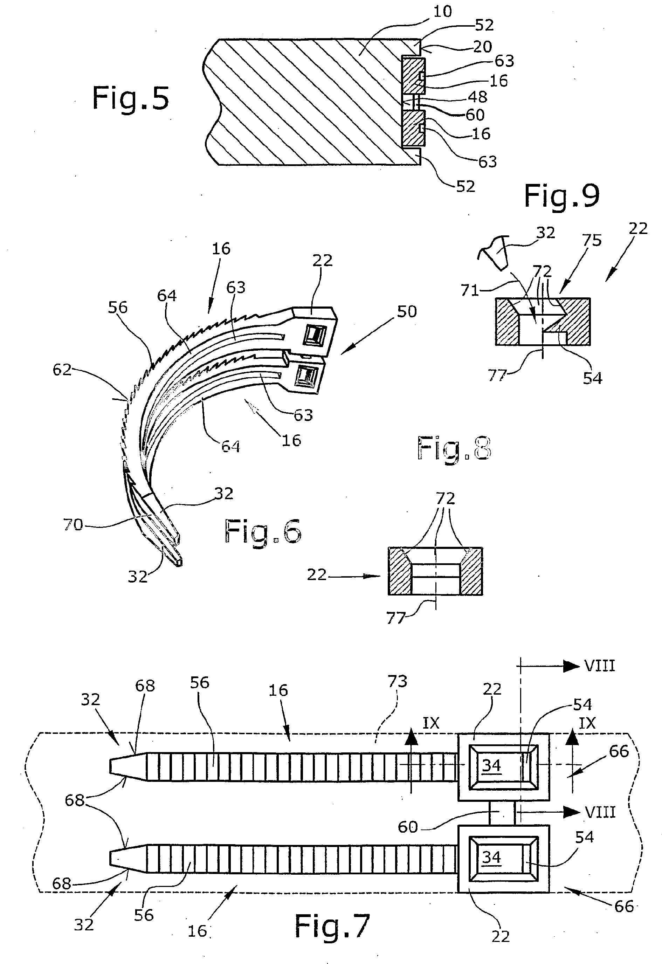

Die Verschlusselemente 10 weisen an ihrer Innenfläche 20 (Fig. 5) einen Führungskanal 48 auf. Der Führungskanal 48 verläuft in Gleitrichtung des Verschlusselements 16, wobei im dargestellten Ausführungsbeispiel eine Doppelverschlussklammer 50 (Fig. 6) vorgesehen ist. Der Führungskanal 48 weist zur seitlichen Führung des Verschlusselements 16 Ansätze bzw. Seitenwände 52 auf.

Vorzugsweise wird zur Durchführung des erfindungsgemäßen Verfahrens die erfindungsgemäße Verschlussvorrichtung eingesetzt, wobei vorzugsweise Doppelverschlusselemente 50 vorgesehen werden, die ebenfalls zu einem Band miteinander verbunden sind. Ein einzelnes Doppelverschlusselement 50 (Fig. 6) besteht aus zwei parallel zueinander angeordneten Verschlusselementen 16. Die beiden Verschlusselemente 16 weisen an ihrem kopfförmigen Ende bzw. dem Kopfelement 22 eine Aufnahmeöffnung 34 auf. Durch die Aufnahmeöffnung 34 wird das freie Ende 32 geführt. Um die beiden Enden in Eingriff zu bringen, weist die Öffnung 34 zumindest ein zweites Rastelement 54 auf, das mit an einer Seitenfläche 62 des Verschlusselements 16 angeordneten ersten Rastelementen 56 zusammenwirkt.

Vorzugsweise weisen die langgestreckten Verbindungselemente 64 an einer Unterseite mindestens eine, vorzugsweise zwei in Längsrichtung verlaufende Nuten 63 auf. In geschlossenem Zustand wird Schlauchverpackungsmaterial, d.h. die das Gut umgebende Folie oder dgl., in die Nuten 63 gedrückt. Hierdurch ist die Lage der Verschlusselemente 16 fixiert. Die Kanten der Längsrillen oder anders ausgestaltete Ausnehmungen 63 sind vorzugsweise abgerundet, um ein Verletzen der Verpackungsfolie oder dgl. zu vermeiden.

Zwei parallel nebeneinander angeordnete Verschlusselemente 16 sind zur seitlichen Führung mit einem Steg 60 miteinander verbunden, wobei der Steg im Bereich der Kopfelemente 22 angeordnet ist. Zur Erzeugung eines endlosen Bandes sind mit dem freien Ende 32 Kopfelemente 22 eines weiteren Verbindungselements 16 verbunden. Hierdurch ist ein "endloses, zweireihiges Band" ausgebildet. Das zweireihige Band weist zwei Bandelemente 66 auf, die jeweils aus mehreren hintereinander angeordneten und miteinander verbundenen Verschlusselementen 16 bestehen. Die einzelnen Bandelemente 66 sind über die zwischen zwei nebeneinander angeordneten Kopfelementen 22 vorgesehenen Stege 60 miteinander verbunden.

Ein Verschlusselement 16 weist somit ein Kopfelement 22 auf, das mit einem langgestreckten, im Querschnitt im Wesentlichen rechteckigen, Verbindungselement 64 (Fig. 6) verbunden ist. Das Verbindungselement weist an der Seitenfläche 62 die ersten Rastelemente 56 auf. Zusätzlich oder anstatt der Rastelemente 56 könnten auch an den Außenseiten, insbesondere auf beiden Außenseiten, einander gegenüberliegende Rastelemente vorgesehen sein.

An dem freien Ende 32 sind insbesondere seitlich angeordnete Abschrägungen 68 angeordnet, so dass sich das freie Ende in Richtung seines Endes verjüngt. Ggf. kann an einer in Fig. 6 nach außen gerichteten Seite 62 eine Abschrägung bzw. Abflachung 70 vorgesehen sein, die zu einer weiteren Verjüngung des freien Endes 32 führt. Bevorzugt ist jedoch das Vorsehen von zwei einander gegenüberliegenden Abschrägungen 68 an den Schmalseiten des Verbindungselements 64.

Vorzugsweise weist die Aufnahmeöffnung 34 Führungsflächen 72 auf, um beim Einführen des freien Endes 32 in die Öffnung ein leichteres Einführen zu ermöglichen. Bei einer im Wesentlichen rechteckigen Öffnung 34 sind vorzugsweise an den zwei Außenseiten Führungsflächen 72 vorgesehen, die mit den Abschrägungen 68 korrespondieren. Bevorzugt ist es, die Öffnung 34 trichterförmig auszugestalten und an allen vier Seiten Führungsflächen 72 vorzusehen. Die Öffnung 34 ist vorzugsweise bezüglich einer Einsteckrichtung 71 des freien Endes 32 der Verschlussklammer 16 trichterförmig (Fig. 9), so dass die Gefahr verringert wird, dass das freie Ende 32 beim automatischen Einführen in die Öffnung 34 unbeabsichtigt abgleitet und die Öffnung 34 verfehlt. Dadurch kann es vorkommen, dass eine der Führungsflächen 72 in dem Kopfelement 22 eine Einführungsspitze 75 ausbildet, die das Einführen des freien Endes 32 erleichtert und ein unbeabsichtigtes herausgleiten erschwert. Das bedeutet, dass zwei einander gegenüberliegende Führungsflächen 72 gegenüber einer Mittellinie 77, ggf. mit unterschiedlichen Winkeln, in die selbe Richtung geneigt sind.

An einer Unterseite des langgestreckten Verbindungselements 64 kann eine Folie 73 vorgesehen sein. Durch die Folie 73 ist der Abstand der beiden Verschlusselemente 16 insbesondere an den freien Enden 32 gewährleistet. Ferner kann die Schlauchverpackungs-Verschlusseinrichtung mit Hilfe der Folie ggf. in der Verschließvorrichtung geführt bzw. gezogen werden.

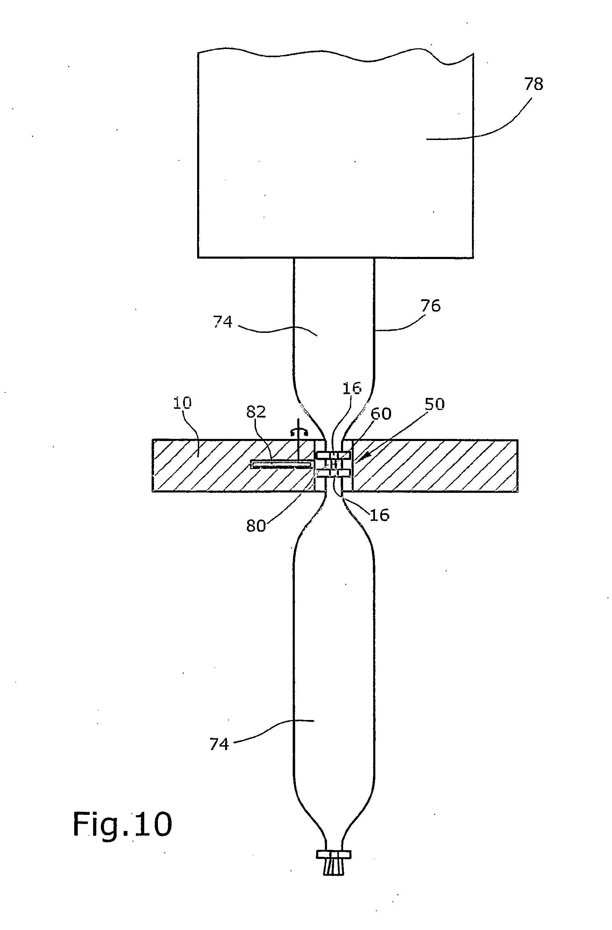

Zum Herstellen einzelner Schlauchverpackungen 74 (Fig. 10) werden diese als Endlosschlauch 76 in einer Befüllvorrichtung 78 mit einem Gut, insbesondere Lebensmittel, gefällt. Mit Hilfe der Verschlussvorrichtung werden die Schlauchverpackungen 74 in einem nicht mit Gut befüllten Bereich 80 mit einer Doppelverschlussklammer 50 verschlossen. Zum Herstellen einzelner Schlauchverpackungen 74 wird die Schlauchhülle 76 zusammen mit dem Steg 60 zwischen zwei Verschlussklammern 16 getrennt. Hierzu ist ein Messer 82 vorgesehen. Das Messer 82 kann innerhalb der Verschlussvorrichtung vorgesehen sein oder der Verschlussvorrichtung nachgeordnet sein.

Zwischen der Befüllvorrichtung 78 und der Verschlusseinrichtung kann eine Vorrichtung vorgesehen sein, die einen unbefüllten Bereich 80 durch Wegdrücken des Füllguts erzeugt.

## Patentansprüche

1. Schlauchverpackungs-Verschlusseinrichtung für mit Gut gefüllten Schlauchverpackungen, mit
mehreren Verschlusselementen (16), wobei jedes Verschlusselement (16) ein langgestrecktes Verbindungselement (64) mit an einer Seitenfläche (62) angeordneten ersten Rastelementen (56) und ein mit dem Verbindungselement (64) verbundenes Kopfelement (22) mit einer Aufnahmeöffnung (34) mit mindestens einem zweiten Rastelement (54) aufweist, wobei ein freies Ende (32) des Verschlusselements (16) zum Verschließen in die Aufnahmeöffnung (34) eingeführt wird,
**dadurch gekennzeichnet daß** die Verschlusselemente (16) ein zweireihiges Band bilden, aus zwei Bandelement (66) das jedes mehrere in Längsrichtung hintereinander angeordnete, miteinander verbundene Verschlusselemente (16) aufweist und die beiden verschlusselemente (16) über Stegteile (60) miteinander verbunden sind.

2. Schlauchverpackungs-Verschlusseinrichtung nach Anspruch 1, **dadurch gekennzeichnet, dass** die Aufnahmeöffnung (34) das Verbindungselement (64) in geschlossenem Zustand zumindest teilweise umgibt.

3. Schlauchverpackungs-Verschlusseinrichtung nach Anspruch 1 oder 2, **dadurch gekennzeichnet, dass** das freie Ende (32) Abschrägungen (68, 70) zum erleichterten Einführen in die Aufnahmeöffnung (34) aufweist.

4. Schlauchverpackungs-Verschlusseinrichtung nach Anspruch 3, **dadurch gekennzeichnet, dass** zumindest zwei einander gegenüberliegende Schmalseiten des freien Endes (32) eine Abschrägung (68) aufweisen.

5. Schlauchverpackungs-Verschlusseinrichtung nach einem der Ansprüche 1 - 4, **dadurch gekennzeichnet, dass** die Aufnahmeöffnung (34) Führungsflächen (72) zum erleichterten Einführen des freien Endes (32) in die Aufnahmeöffnung (34) aufweist.

6. Schlauchverpackungs-Verschlusseinrichtung nach einem der Ansprüche 1 - 5, **dadurch gekennzeichnet, dass** die Aufnahmeöffnung (34) trichterförmig ist.

7. Schlauchverpackungs-Verschlusseinrichtung nach einem der Ansprüche 1 - 6, **dadurch gekennzeichnet, dass** die Aufnahmeöffnung (34) in Längsrichtung geschlossen ist.

8. Schlauchverpackungs-Verschlusseinrichtung nach einem der Ansprüche 1 - 7, **dadurch gekennzeichnet, dass** das gesamte Verschlusselement (16) über die gesamte Länge im Wesentlichen dieselbe Dicke aufweist.

9. Schlauchverpackungs-Verschlusseinrichtung nach einem der Ansprüche 1 - 8, **dadurch gekennzeichnet, dass** die die beiden Bandelemente (66) verbindenden Stegteile (60) jeweils auf Höhe der Kopfteile (22), insbesondere zwischen jeweils zwei einander gegenüberliegender Kopfteile (22) angeordnet sind.

10. Schlauchverpackungs-Verschlusseinrichtung nach einem der Ansprüche 1 - 9, **dadurch gekennzeichnet, dass** eine Unterseite der Verschlusselemente (16) mit einer Trägerfolie (73) verbunden ist, wobei sich die Trägerfolie vorzugsweise über das gesamte Band erstreckt.

11. Schlauchverpackungs-Verschlusseinrichtung nach einem der Ansprüche 1 - 10, **dadurch gekennzeichnet, dass** an einer Unterseite des Verbindungselements (64) Ausnehmung, insbesondere Längsrillen (63) vorgesehen sind.

## Claims

1. Tubular package closing device for tubular packages filled with a product, comprising
a plurality of closing elements (16), each closing element (16) comprising an elongate connecting element (64) with first locking elements (56) provided on one side face (62) and a head element (22) connected with the connecting element (64) and being provided with at least one second locking element (54), a free end (32) of the closing element (16) being inserted into the receiving opening (34) for closing,
**characterized in that** the closing elements (16) form a two-row band of two band elements (66), each comprising a plurality of interconnected closing elements (16) arranged in succession in the longitudinal direction, and the two closing elements (16) are connected with each other via web members (60).

2. Tubular package closing device of claim 1, **characterized in that** the receiving opening (34) surrounds the connecting element (64) at least in part when closed.

3. Tubular package closing device of claim 1 or 2, **characterized in that** the free end (32) has bevels (68, 70) for a facilitated introduction into the receiving opening (34).

4. Tubular package closing device of claim 3, **characterized in that** at least two opposing short sides of the free end (32) have a bevel (68).

5. Tubular package closing device of one of claims 1-4, **characterized in that** the receiving opening (34) comprises guide surfaces (72) for a facilitated insertion of the free end (32) into the receiving opening (34).

6. Tubular package closing device of one of claims 1-5, **characterized in that** the receiving opening (34) is funnel-shaped.

7. Tubular package closing device of one of claims 1-6, **characterized in that** the receiving opening (34) is closed in the longitudinal direction.

8. Tubular package closing device of one of claims 1-7, **characterized in that** the entire closing element (16) has substantially the same thickness over all of its length.

9. Tubular package closing device of one of claims 1-8, **characterized in that** the web members (60) connecting the two band elements (66) are respectively arranged at the head elements (22), in particular between two respectively opposite head elements (22).

10. Tubular package closing device of one of claims 1-9, **characterized in that** a bottom face of the closing elements (16) is connected with a carrier film (73), said carrier film preferably extending along all of the band.

11. Tubular package closing device of one of claims 1-11, **characterized in that** recesses, in particular longitudinal grooves (63), are provided on a bottom face of the connecting elements (64).

## Revendications

1. Dispositif de fermeture pour emballages tubulaires destiné pour emballages tubulaires remplies d#un produit, comprenant
plusieurs éléments de fermeture (16), chaque élément de fermeture (16) comprenant un élément de raccord (64) allongé avec des premiers éléments d'encoche (56) disposés sur une face latérale (62) et un élément de tête (22) raccordé à l'élément de raccord (64) et comprenant une ouverture de logement (34) avec au moins un deuxième élément d'encoche (54), une extrémité libre (32) de l'élément de fermeture (16) étant insérée dans l'ouverture de logement (34) pour réaliser la fermeture,
**caractérisé en ce que** les éléments de fermeture (16) forment une bande à rangée double de deux éléments de bande (66), chaque élément de bande comprenant des éléments de fermeture (16) disposés l'un derrière l'autre selon la direction longitudinale, connectés l'un à l'autre, et les deux éléments de fermeture (16) sont connectés entre eux par des parties d'âmes (60).

2. Dispositif de fermeture pour emballages tubulaires selon la revendication 1, **caractérisé en ce que** l'ouverture de logement (34) entoure l'élément de fermeture (16) au moins partiellement dans l'état fermé.

3. Dispositif de fermeture pour emballages tubulaires selon la revendication 1 ou 2, **caractérisé en ce que** l'extrémité libre (32) présente des chanfreins (68, 70) pour faciliter l'insertion dans l'élément de logement (34).

4. Dispositif de fermeture pour emballages tubulaires selon la revendication 3, **caractérisé en ce qu'**au moins deux côtés étroits opposés de ladite extrémité libre (32) présentent un chanfrein (68).

5. Dispositif de fermeture pour emballages tubulaires selon l'une quelconque des revendications 1 - 4, **caractérisé en ce que** l'ouverture de logement (34) comprend des faces de guidage pour faciliter l'insertion de ladite extrémité libre (32) dans l'ouverture de logement (34).

6. Dispositif de fermeture pour emballages tubulaires selon l'une quelconque des revendications 1 - 5, **caractérisé en ce que** l'ouverture de logement (34) présente une forme de trémie.

7. Dispositif de fermeture pour emballages tubulaires selon l'une quelconque des revendications 1 - 6, **caractérisé en ce que** l'ouverture de logement (34) est fermée selon la direction longitudinale.

8. Dispositif de fermeture pour emballages tubulaires selon l'une quelconque des revendications 1 - 7, **caractérisé en ce que** tout l'élément de fermeture (16) présente sensiblement la même épaisseur sur toute la longueur.

9. Dispositif de fermeture pour emballages tubulaires selon l'une quelconque des revendications 1 - 8, **caractérisé en ce que** les parties d'âme (60) liant les deux éléments de bande (66) sont chacune positionnée au niveau des éléments de tête (22), particulièrement entre deux éléments de tête (22) opposés respectifs.

10. Dispositif de fermeture pour emballages tubulaires selon l'une quelconque des revendications 1 - 9, **caractérisé en ce que** une face inférieure des éléments de fermeture (16) est liée à un film de support (73), le film de support s'étendant préférentiellement sur toute la bande.

11. Dispositif de fermeture pour emballages tubulaires selon l'une quelconque des revendications 1 - 10, **caractérisé en ce que** des creux, particulièrement des rainures longitudinales (63), sont prévus sur une face inférieure de l'élément de raccord (64).
